(19) 

**Europäisches Patentamt**
**European Patent Office**
**Office européen des brevets**

(11) **EP 3 936 822 B1**

(12) **EUROPEAN PATENT SPECIFICATION**

(45) Date of publication and mention
of the grant of the patent:
**24.04.2024  Bulletin 2024/17**

(21) Application number: **20922464.1**

(22) Date of filing: **16.10.2020**

(51) International Patent Classification (IPC):
*G01C 21/20* (2006.01)     *G01S 19/49* (2010.01)
*G01C 21/36* (2006.01)     *G01C 21/00* (2006.01)
*G01C 21/30* (2006.01)

(52) Cooperative Patent Classification (CPC):
**G01C 21/3889; G01C 21/206; G01C 21/30;**
**G01C 21/3685; G01C 21/3815; G01C 21/383**

(86) International application number:
**PCT/CN2020/121581**

(87) International publication number:
**WO 2021/238026 (02.12.2021 Gazette 2021/48)**

(54) **VEHICLE POSITIONING METHOD AND APPARATUS, AND VEHICLE, AND STORAGE MEDIUM**

VERFAHREN UND VORRICHTUNG ZUR FAHRZEUGPOSITIONIERUNG, FAHRZEUG UND
SPEICHERMEDIUM

PROCÉDÉ ET APPAREIL DE POSITIONNEMENT DE VÉHICULE, AINSI QUE VÉHICULE ET
SUPPORT DE STOCKAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **27.05.2020  CN 202010464149**

(43) Date of publication of application:
**12.01.2022  Bulletin 2022/02**

(73) Proprietor: **Guangzhou Xiaopeng Autopilot
Technology Co., Ltd.
Guangzhou, Guangdong 510000 (CN)**

(72) Inventors:
• **LI, Hongjun**
  **Guangdong 510000 (CN)**
• **CHAI, Wennan**
  **Guangdong 510000 (CN)**
• **LIU, Zhongyuan**
  **Guangdong 510000 (CN)**
• **HUANG, Ya**
  **Guangdong 510000 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 105 931 124     CN-A- 106 802 151
CN-A- 109 029 418     CN-A- 110 967 023
CN-A- 111 521 186     US-A1- 2007 021 907
US-A1- 2011 054 791     US-A1- 2017 350 712
US-A1- 2019 316 914

• WILFINGER ROMAN ET AL: "Indoor position
determination using location fingerprinting and
vehicle sensor data", 2016 EUROPEAN
NAVIGATION CONFERENCE (ENC), IEEE, 30 May
2016 (2016-05-30), pages 1-9, XP032935318, DOI:
10.1109/EURONAV.2016.7530561 [retrieved on
2016-08-02]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present disclosure relates to the technical field of autonomous driving, and more particularly, to a vehicle positioning method and device, a vehicle, and a storage medium.

BACKGROUND

The existing positioning technology in autonomous driving mainly uses satellite positioning signals, such as GPS (Global Positioning System) signals or Beidou satellite signals for positioning. However, in case of no satellite signals, other means is also needed for positioning. Since the case of no satellite signals mainly occurs in indoors, such as an underground parking lot, the positioning without satellite signals may also be called indoor positioning.

The existing mainstream indoor positioning technology of autonomous driving adopts vision acquisition mapping or lidar mapping, and carries out positioning according to the map. Advantages and disadvantages of visual positioning or lidar indoor positioning technology are very obvious. First, a processor needs to possess a very powerful computing power, so that huge video data can be processed. Secondly, the produced maps will encounter great difficulties in integration, and the constant accumulation of feature points will lead to the accumulation of huge data in a tiny map. Thirdly, the whole hardware equipment for processing the vision algorithm is complicated and costly.

Patent document US 2007/021907 A1 discloses a navigation system mounted in a vehicle positioned in a facility, whose on-site passage data is unavailable for the system. The system determines whether a facility exit is learned. When the facility exit is learned, the system defines, as a facility exit coordinates, the learned coordinates. When the facility exit is not learned, the system defines, as the facility coordinates, guidance coordinates, which are used to terminate a route guidance when the facility is designated as a destination. The system then retrieves a route using the defined facility exit coordinates as a departure position. Even when the on-site passage data is unavailable, defining the facility exit allows the system to highly accurately retrieve a route passing through the actual facility exit.

SUMMARY

The solution is provided by the features of the independent claims. Variations are as described by the dependent claims.

The embodiments of the present disclosure disclose to a vehicle positioning method and device, a vehicle, and a storage medium, which can realize indoor positioning with low cost.

A first aspect of the embodiments of the present disclosure discloses a vehicle positioning method, comprising: identifying a site entrance; acquiring an indoor semantic map of the site according to the site entrance, the indoor semantic map comprising semantic feature points of the site; correcting positioning information of the vehicle in the indoor semantic map according to the semantic feature points acquired during the movement of the vehicle; and acquiring the positioning information of the vehicle according to movement information of the vehicle relative to a previous semantic feature point.

A second aspect of the embodiments of the present disclosure discloses a vehicle positioning device, comprising:

an identification module configured for identifying a site entrance;

a map acquiring module configured for acquiring an indoor semantic map of the site according to the site entrance, the indoor semantic map comprising semantic feature points of the site;

a correction module configured for correcting positioning information of the vehicle in the indoor semantic map according to the semantic feature points acquired during the movement of the vehicle; and

a positioning information acquisition module configured for acquiring the positioning information of the vehicle according to movement information of the vehicle relative to a previous semantic feature point.

A third aspect of the embodiments of the present disclosure discloses a vehicle. The vehicle comprises the vehicle positioning device disclose in the second aspect of the embodiments of the present disclosure.

According to a fourth aspect, the embodiments of the present disclosure disclose a computer-readable storage medium, wherein a computer program is stored in the computer-readable storage medium, and the computer program causes a computer to execute the vehicle positioning method according to the first aspect of the embodiments of the present disclosure.

Compared with the prior art, the embodiments of the present disclosure have the following advantageous effects: because the selected features are semantic and recognizable features of a road, a data volume of these points in each site is very limited, and the complexity of a processing algorithm is greatly simplified. Methods for identifying these points used in the method are mainly physical quantities when the vehicle runs. For example, entry and exit slope points can be identified mainly by attitude and IMU (Inertial Measurement Unit), a speed bump can be identified by speed and IMU, and a road connection point can be identified by steering wheel and IMU. These physical quantities are calculated by other parts of the vehicle, and the identifying process is greatly simplified accordingly.

## BRIEF DESCRIPTION OF THE DRAWINGS

In order to illustrate the technical solutions in the embodiments of the present disclosure more clearly, the drawings used in the embodiments will be briefly described below. Obviously, the drawings in the following description are merely some embodiments of the present disclosure. For those of ordinary skills in the art, other drawings may also be obtained based on these drawings without any creative work.

FIG. 1 is a flow chart of an embodiment of a vehicle positioning method disclosed in an embodiment of the present disclosure; and
FIG. 2 is a schematic diagram of modules of an embodiment of a vehicle positioning device disclosed in an embodiment of the present disclosure.

## DETAILED DESCRIPTION

The following clearly and completely describes the technical solutions in the embodiments of the present disclosure with reference to the accompanying drawings in the embodiments of the disclosure. Apparently, the described embodiments are merely some but not all of the embodiments of the present disclosure. Based on the embodiments of the present disclosure, all other embodiments obtained by those of ordinary skills in the art without going through any creative work shall fall within the protection scope of the present disclosure.

It should be noted that the terms "first", "second", "third" and "fourth" and the like in the specification and claims of the present disclosure as well as the above drawings are used to distinguish different objects, and are not used to describe a specific sequence. The terms "comprise" and "have" and any deformation thereof are intended to cover a non-exclusive inclusion, for example, a process, method, system, product, or device that comprises a series of steps or units is not necessarily limited to those steps or units that are explicitly listed, but may comprise other steps or units that are not explicitly listed or inherent to such process, method, product or device.

In an embodiment of the present disclosure, an indoor positioning method is proposed. When a vehicle is about to enter or has entered a region requiring indoor positioning (such as an underground parking lot), a semantic map of the parking lot is first acquired, and then after entering the underground parking lot, positioning of the vehicle is estimated by using an integrated result of an IMU and an odometer, and meanwhile, semantic feature points are identified and matched, and the estimated result is corrected by using matched feature points continuously, so that a real-time indoor high-precision positioning result of the vehicle can be obtained. The semantic feature points are semantic and recognizable feature points in a road, including but not limited to at least one of the following: speed bumps, entry and exit slope points, road connection points, parking places, obstacle positions, etc. Semantic map is a map composed of semantic feature points and their relationships. The semantic map is a map composed of the semantic feature points and mutual relationships therebetween.

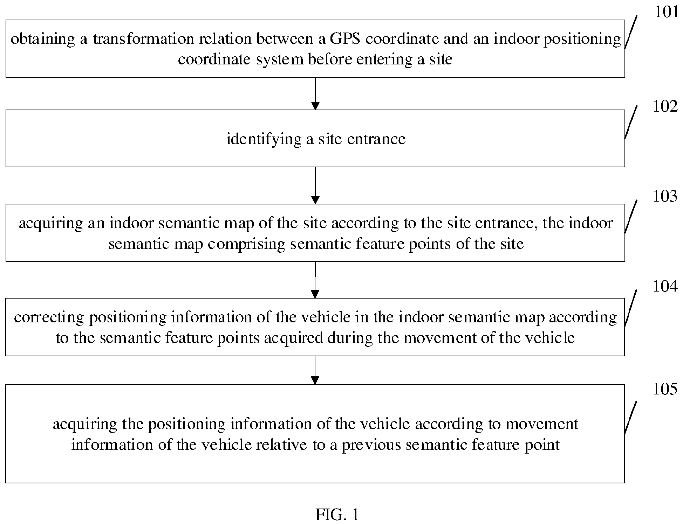

FIG. 1 is a flow chart of an embodiment of a vehicle positioning method of the present disclosure, comprising:

101. obtaining a transformation relation between a GPS coordinate and an indoor positioning coordinate system before entering a site.

First, it should be noted that this step is an optional step.

In the embodiment of the present disclosure, a certain transition region may be set to obtain the transformation relation between the GPS coordinate and the indoor positioning coordinate system, for example, this region may be an region between 30 meters and 200 meters away from the site.

The vehicle is made to run in the transition region to collect two results comprising positioning information of a plurality of feature points in a GPS coordinate system and positioning information of a vehicle odometer in the transition region, and find a rotation and translation relation between the two groups of points by a mathematical optimization method.

For example, min $J = \Sigma(P_{i/gps} - T_1 * P_{i/scu})^2$ is acquired.

wherein:

$P_{i/\text{gps}}$ is a GPS coordinate of an $i^{th}$ feature point on a GPS map;
$P_{i/scu}$ is a coordinate of the $i^{th}$ feature point positioned through the vehicle odometer;
$T_1$ is the transformation relation between the GPS coordinate and the indoor positioning coordinate system; and
when J is minimized, the transformation relation between the GPS coordinate and the indoor positioning coordinate system, i.e., a $T_1$ matrix, is obtained.

A calculation method for the GPS coordinate after the vehicle enters an underground parking lot is as follows:

$$P_{car} = T_1 * P_{scu}$$

wherein:

$P_{car}$ is a GPS coordinate of the vehicle; and
$P_{scu}$ is a coordinate of the vehicle positioned through the vehicle odometer.

102. Identifying a site entrance.

For example, if the site may be an underground parking lot, then the site entrance may usually be an entrance of the underground parking lot.

In some scenarios, the site entrance may also be a certain distance from the underground parking lot, and when the vehicle arrives at the place, it is deemed that the vehicle is about to enter the underground parking lot.

Generally, recognition is based on GPS coordinates.

In general, the site entrance is identified according to the GPS coordinate.

103. Acquiring an indoor semantic map of the site according to the site entrance, the indoor semantic map comprising semantic feature points of the site.

This indoor semantic map may be stored locally by the vehicle, or acquired from a cloud or other remote terminals.

104. Correcting positioning information of the vehicle in the indoor semantic map according to the semantic feature points acquired during the movement of the vehicle.

A method of acquiring the semantic feature points may specifically comprise: identifying the semantic feature points according to movement data obtained during the movement.

The movement data obtained during the movement may comprise information such as a vehicle speed, an observed quantity of an IMU, an angle of a steering wheel, a body posture, or the like.

A specific identification method, for example, comprises:

identifying entry and exit slope points according to the gesture and the IMU;
identifying a speed bump according to the speed and the IMU;
identifying a road connection point according to the steering wheel and the IPU.

The step of correcting the positioning information of the vehicle according to the semantic feature points may specifically comprise:
A1. Performing global topology matching according to the semantic feature points and the indoor semantic map.

A basic method of the global topology matching is:

matching with corresponding information in the indoor semantic map according to the semantic feature points of the vehicle and other road sign feature information;
calculating a positioning transformation matrix according to the matching result; and
rotating and translating semantic feature points and other landmark feature information of two maps respectively according to the positioning transformation matrix.

The global topology matching is intended to keep matching between a driving track of the vehicle and a map track in shapes, which is called rough matching.

A2. Matching the semantic feature points in a distance sliding window.

The distance sliding window refers to a mileage distance traveled by the vehicle recently, for example, in this embodiment, the maximum distance is set to be 200 meters.

Matching refers to finding matched semantic feature points in the indoor semantic map according to the semantic feature points acquired in the distance sliding window.

Advantages of the above two-step matching strategy adopted by the embodiment of this method comprise that: the global topology matching can make two map routes overlap as much as possible, which are not limited to single points, and performing distance sliding window matching on the basis of topology matching improves the positioning accuracy.

A3. Acquiring a correction matrix according to the matching result in the distance sliding window.

A goal expression of correction matrix calculation is:

$$\min J = \sum \rho_i (P_{i/venue} - T_2 * P_{i/new})^2$$

the above expression is solved so that $T_2$ obtained when J is minimized is the correction matrix; wherein:

$\rho_i$ is a weight of an ith matched feature point;
$P_{i/venue}$ is a coordinate of the ith matched feature point on the semantic feature map;
$P_{i/new}$ is a coordinate of the ith matched feature point in a track map of the vehicle; and
$T_2$ is the correction matrix.

Description of the weight $\rho$:

The matching of some semantic feature points is more important in the calculation of the correction matrix, such as the road connection points and the entry and exit slope points, while the matching of some semantic feature points is less important in the calculation of the correction matrix, such as speed bumps or obstacles, so it is necessary to distinguish weights.

Some semantic feature points are closer to the current position of the vehicle, which are more important in the calculation of the correction matrix. Some semantic feature points are farther to the current position of the vehicle, which are less important in the calculation of the correction matrix.

The above are the basic rules of weight setting, which may be set according to the situations in practical application.

A4. Correcting the positioning information of the vehicle according to the correction matrix.

The positioning result is $T_2 * P_{scu}$, and the positioning information of the vehicle is obtained through multiplying the correction matrix by the current position of the vehicle.

$P_{scu}$ is a coordinate of the vehicle of the indoor positioning coordinate system positioned through the vehicle odometer.

105. Acquiring the positioning information of the vehicle according to movement information of the vehicle relative to a previous semantic feature point.

Specifically, the movement information of the vehicle is calculated through the IMU and/or the odometer. The movement information can also be calculated through a compass and the vehicle speed.

Further, a specific method for calculating the positioning information of the vehicle is as follows:

in a short time period, a direction angle of the vehicle at an initial moment is $\theta_0$ and the calculation result of the odometer is $\Delta s$, the IMU can obtain an angle $\theta$, and the displacement in the short time period is:

$$\Delta x = \Delta s * \cos(\theta_0 + \theta)$$

$$\Delta y = \Delta s * \sin(\theta_0 + \theta)$$

the positioning result is just an accumulation process of $\Delta x$ and $\Delta y$.

$$x = x_0 + \sum \Delta x$$

$$y = y_0 + \sum \Delta y$$

It can be understood that $x_0$ and $y_0$ in the above formulas are an abscissa and an ordinate of the initial position, and x and y are the positioning information of the vehicle.

It can be seen from the above description that the embodiments of the present disclosure have the following advantages:

Because the selected features are semantic and recognizable features of a road, a data volume of these points in each site is very limited, and the complexity of a processing algorithm is greatly simplified. Methods for identifying these points used in the method are mainly physical quantities when the vehicle runs. For example, entry and exit slope points can be identified mainly by attitude and IMU, a speed bump can be identified by speed and IMU, and a road connection point can be identified by steering wheel and IMU. These physical quantities are calculated by other parts of the vehicle, and the identifying process is greatly simplified accordingly.

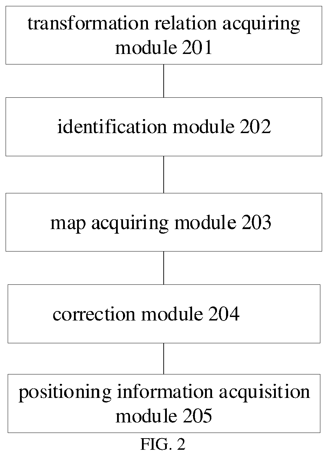

As shown in FIG. 2, FIG. 2 is a schematic diagram of modules of an embodiment of a vehicle positioning device of the present disclosure, comprising:

a transformation relation acquiring module 201 configured for obtaining a transformation relation between a GPS coordinate and an indoor positioning coordinate system before entering a site;

an identification module 202 configured for identifying a site entrance;

a map acquiring module 203 configured for acquiring an indoor semantic map of the site according to the site entrance, the indoor semantic map comprising semantic feature points of the site;

a correction module 204 configured for correcting positioning information of the vehicle in the indoor semantic map according to the semantic feature points acquired during the movement of the vehicle; and

a positioning information acquisition module 205 configured for acquiring the positioning information of the vehicle according to movement information of the vehicle relative to a previous semantic feature point.

The embodiments of the present disclosure also disclose a vehicle, wherein the vehicle comprises the vehicle positioning device above.

The embodiments of the present disclosure also disclose a computer-readable storage medium storing a computer program thereon, wherein the computer program causes a computer to execute any of the vehicle positioning methods mentioned above.

The embodiments of the present disclosure also disclose a computer program product, wherein the computer program product, when running on a computer, causes the computer to execute part or all of the steps of the method as in the above method embodiments.

The embodiments of the present disclosure also disclose an application publishing platform, and the application publishing platform is configured for publishing a computer program product, wherein when the computer program product runs on a computer, the computer is caused to execute part or all of the steps of the method as in the above method embodiments.

Those of ordinary skills in the art can understand that all or part of the steps in the various methods of the above embodiments can be completed by instructing related hardware through programs, and the program can be stored in a computer-readable storage medium. The storage medium comprises a Read-Only Memory (ROM), a Random Access Memory (RAM), a Programmable Read-only Memory (PROM), an Erasable Programmable Read Only Memory (EPROM), a One-time Programmable Read-Only Memory (OTPROM), an Electrically-Erasable Read-Only Memory (EEPROM), a Compact Disc Read-Only Memory (CD-ROM), or other optical disc memory, magnetic disc memory, magnetic tape memory, or any other computer-readable medium that can be used to carry or store data.

The vehicle positioning method and device, the vehicle and the storage medium disclosed by the embodiments of the present disclosure are described in detail above. Specific examples are applied to explain the principle and implementation of the present disclosure herein. The explanations of the above embodiments are only used to help understand the method of the present disclosure and the core idea thereof. Meanwhile, for those of ordinary skills in the art, there will be changes in the specific implementation and application scope according to the idea of the present disclosure, insofar as they fall within the scope of the claims.

## Claims

1. A vehicle positioning method, **characterized in that**, the method comprises:

   identifying (102) a site entrance;
   acquiring (103) an indoor semantic map of the site according to the site entrance, the indoor semantic map comprising semantic feature points of the site, wherein the semantic feature points are semantic and recognizable feature points in a road, comprising at least one of: speed bumps, entry and exit slope points, road connection points, parking places, obstacle positions, and wherein the indoor semantic map is a map composed of semantic feature points and mutual relationships of the semantic feature points;
   correcting (104) positioning information of the vehicle in the indoor semantic map according to the semantic feature points acquired during the movement of the vehicle, comprising:

   identifying the semantic feature points according to movement data obtained during the movement; and
   correcting the positioning information of the vehicle according to the semantic feature points,
   wherein the movement data comprises a vehicle speed, an observed quantity of an IMU, an angle of a steering wheel, and a body posture of the vehicle, and identifying the semantic feature points comprises:

   identifying the entry and exit slope points according to the body posture of the vehicle and the observed quantity of the IMU;
   identifying the speed bump according to the vehicle speed and the observed quantity of the IMU; and

   identifying the road connection point according to the angle of the steering wheel and the observed quantity of the IMU; and

   acquiring (105) the positioning information of the vehicle according to movement information of the vehicle relative to a previous semantic feature point.

2. The vehicle positioning method according to claim 1, **characterized in that**, before the step of identifying the site entrance, the method further comprises: obtaining (101) a transformation relation between a GPS coordinate and an indoor positioning coordinate system.

3. The vehicle positioning method according to claim 2, **characterized in that**, the step of obtaining (101) the transformation relation between the GPS coordinate and the indoor positioning coordinate system comprises:

   setting a transition region to obtain the transformation relation between the GPS coordinate and the indoor positioning coordinate system;
   making the vehicle run in a transition region to acquire the feature points, and according to the formula of min $J = \Sigma(P_{i/gps} - T_1 * P_{i/scu})^2$ , acquiring the transformation relation between the GPS coordinate and the indoor positioning coordinate system when J is minimized;
   wherein:

   $P_{i/gps}$ is a GPS coordinate of an $i^{th}$ feature point in the transition region on a GPS map;
   $P_{i/scu}$ is a coordinate of the indoor positioning coordinate system obtained by the $i^{th}$ feature point in the transition region through a vehicle odometer; and
   $T_1$ is the transformation relation between the GPS coordinate and the indoor positioning coordinate system.

4. The vehicle positioning method according to claim 1, **characterized in that**, the step of correcting the positioning information of the vehicle according to the semantic feature points comprises:

   performing global topology matching according to the semantic feature points and the indoor semantic map;
   matching the semantic feature points in a distance sliding window;
   acquiring a correction matrix according to the matching result in the distance sliding window; and

correcting the positioning information of the vehicle according to the correction matrix.

5. The vehicle positioning method according to claim 4, **characterized in that**,
the step of performing the global topology matching according to the semantic feature points and the indoor semantic map specifically comprises:

matching with corresponding information in the indoor semantic map according to the semantic feature points of the vehicle and other road sign feature information;
calculating a positioning transformation matrix according to the matching result; and
rotating and translating semantic feature points and other landmark feature information of two maps respectively according to the positioning transformation matrix.

6. The vehicle positioning method according to claim 4, **characterized in that**,
the step of acquiring the correction matrix according to the matching result in the distance sliding window comprises:

according to min $J = \Sigma\rho_i(P_{i/venue} - T_2{}^*P_{i/new})^2$, acquiring the correction matrix when J is minimized;
wherein:

$\rho_i$ is a weight of an $i^{th}$ matched feature point;
$P_{i/venue}$ is a coordinate of the $i^{th}$ matched feature point on the semantic feature map;
$P_{i/new}$ is a coordinate of the $i^{th}$ matched feature point in a track map of the vehicle; and
$T_2$ is the correction matrix.

7. A vehicle positioning device, **characterized in that**, the device comprises:

an identification module (202) configured for identifying a site entrance;
a map acquiring module (203) configured for acquiring an indoor semantic map of the site according to the site entrance, the indoor semantic map comprising semantic feature points of the site, wherein the semantic feature points are semantic and recognizable feature points in a road, comprising at least one of: speed bumps, entry and exit slope points, road connection points, parking places, obstacle positions, and wherein the indoor semantic map is a map composed of semantic feature points and mutual relationships of the semantic feature points;
a correction module (204) configured for correcting positioning information of the vehicle in the indoor semantic map according to the semantic feature points acquired during the movement of the vehicle, wherein the correcting positioning information of the vehicle in the indoor semantic map according to the semantic feature points acquired during the movement of the vehicle comprises:

identifying the semantic feature points according to movement data obtained during the movement; and
correcting the positioning information of the vehicle according to the semantic feature points,
wherein the movement data comprises a vehicle speed, an observed quantity of an IMU, an angle of a steering wheel, and a body posture of the vehicle, and identifying the semantic feature points comprises:

identifying the entry and exit slope points according to the body posture of the vehicle and the observed quantity of the IMU;
identifying the speed bump according to the vehicle speed and the observed quantity of the IMU; and

identifying the road connection point according to the angle of the steering wheel and the observed quantity of the IMU; and
a positioning information acquisition module (205) configured for acquiring the positioning information of the vehicle according to movement information of the vehicle relative to a previous semantic feature point.

8. The vehicle positioning device according to claim 7, **characterized in that**, the device further comprises:
a transformation relation acquiring module 201 configured for obtaining a transformation relation between a GPS coordinate and an indoor positioning coordinate system before entering a site.

9. A vehicle, **characterized in that**, the vehicle comprises the vehicle positioning device according to claim 7.

10. A computer-readable storage medium, **characterized in that**, a computer program is stored on the computer-readable storage medium, and the computer program causes a computer to execute the vehicle positioning method according to any one of claims 1 to 6.

11. A computer program product, **characterized in that**, the computer program product, when running on a computer, causes the computer to execute the vehicle positioning method according to any one of claims 1 to 6.

12. An application publishing platform, **characterized in that**, the application publishing platform is configured for publishing a computer program product, when the computer program product runs on a computer, the computer is caused to execute the vehicle positioning method according to any one of claims 1 to 6.

**Patentansprüche**

1. Fahrzeugpositionsbestimmungsverfahren, **dadurch gekennzeichnet, dass** das Verfahren umfasst:

   Identifizieren (102) eines Standorteingangs;
   Erfassen (103) einer semantischen Innenraumkarte des Standortes gemäß dem Standorteingang, wobei die semantische Innenraumkarte semantische Merkmalspunkte des Standortes umfasst, wobei die semantischen Merkmalspunkte semantische und erkennbare Merkmalspunkte einer Straße sind, die mindestens eines von Temposchwellen, Einfahrt- und Ausfahrtrampenpunkten, Straßenverbindungspunkten, Parkplätzen und Hindernispositionen umfassen, und wobei die semantische Innenraumkarte eine Karte ist, die aus semantischen Merkmalspunkten und gegenseitigen Beziehungen der semantischen Merkmalspunkte zusammengesetzt ist;
   Korrigieren (104) der Positionsbestimmungsinformationen des Fahrzeugs auf der semantischen Innenraumkarte gemäß den semantischen Merkmalspunkten, die während der Bewegung des Fahrzeugs erfasst werden, was umfasst:

      Identifizieren der semantischen Merkmalspunkte gemäß den Bewegungsdaten, die während der Bewegung erhalten wurden; und
      Korrigieren der Positionsbestimmungsinformationen des Fahrzeugs gemäß den semantischen Merkmalspunkten,
      wobei die Bewegungsdaten eine Fahrzeuggeschwindigkeit, eine beobachtete Quantität einer Trägheitsmesseinheit, einen Winkel eines Lenkrads und eine Karosserielage des Fahrzeugs umfassen, und das Identifizieren der semantischen Merkmalspunkte umfasst:

         Identifizieren der Einfahrt- und Ausfahrtrampenpunkte gemäß der Karosserielage des Fahrzeugs und der beobachteten Quantität der Trägheitsmesseinheit;
Identifizieren der Temposchwelle gemäß der Fahrzeuggeschwindigkeit und der beobachteten Quantität der Trägheitsmesseinheit; und
Identifizieren des Straßenverbindungspunktes gemäß dem Winkel des Lenkrads und der beobachteten Quantität der Trägheitsmesseinheit; und

Erfassen (105) der Positionsbestimmungsinformationen des Fahrzeugs gemäß den Bewegungsinformationen des Fahrzeugs relativ zu einem vorherigen semantischen Merkmalspunkt.

2. Fahrzeugpositionsbestimmungsverfahren nach Anspruch 1, **dadurch gekennzeichnet, dass** das Verfahren vor dem Schritt des Identifizierens des Standorteingangs des Weiteren umfasst:
   Erhalten (101) einer Transformationsbeziehung zwischen einer GPS-Koordinate und einem Koordinatensystem zur Positionsbestimmung in Innenräumen.

3. Fahrzeugpositionsbestimmungsverfahren nach Anspruch 2, **dadurch gekennzeichnet, dass** der Schritt des Erhaltens (101) der Transformationsbeziehung zwischen der GPS-Koordinate und dem Koordinatensystem zur Positionsbestimmung in Innenräumen umfasst:

   Einstellen einer Übergangsregion zum Erhalten der Transformationsbeziehung zwischen der GPS-Koordinate und dem Koordinatensystem zur Positionsbestimmung in Innenräumen;
   Fahrenlassen des Fahrzeugs in einer Übergangsregion, um die Merkmalspunkte zu erfassen, und gemäß der Formel min $J = \Sigma(P_{i/gps} - T_1 * P_{i/scu})^2$, Erfassen der Transformationsbeziehung zwischen der GPS-Koordinate und dem Koordinatensystem zur Positionsbestimmung in Innenräumen, wenn J minimiert ist; wobei:

      $P_{i/gps}$ eine GPS-Koordinate eines i-ten Merkmalspunktes in der Übergangsregion auf einer GPS-Karte ist;
      $P_{i/scu}$ eine Koordinate des Koordinatensystems zur Positionsbestimmung in Innenräumen ist, die durch den i-ten Merkmalspunkt in der Übergangsregion mittels eines Fahrzeugkilometerzählers erhalten wird; und
      $T_1$ die Transformationsbeziehung zwischen der GPS-Koordinate und dem Koordinatensystems zur Positionsbestimmung in Innenräumen ist.

**4.** Fahrzeugpositionsbestimmungsverfahren nach Anspruch 1, **dadurch gekennzeichnet, dass** der Schritt des Korrigierens der Positionsbestimmungsinformationen des Fahrzeugs gemäß den semantischen Merkmalspunkten umfasst:

Durchführen eines globalen Topologieabgleichs gemäß den semantischen Merkmalspunkten und der semantischen Innenraumkarte;
Abgleichen der semantischen Merkmalspunkte in einem Distanzgleitfenster;
Erfassen einer Korrekturmatrix gemäß dem Abgleichsergebnis in dem Distanzgleitfenster; und
Korrigieren der Positionsbestimmungsinformationen des Fahrzeugs gemäß der Korrekturmatrix.

**5.** Fahrzeugpositionsbestimmungsverfahren nach Anspruch 4, **dadurch gekennzeichnet, dass** der Schritt des Durchführens des globalen Topologieabgleichs gemäß den semantischen Merkmalspunkten und der semantischen Innenraumkarte insbesondere umfasst:

Abgleichen mit den entsprechenden Informationen in der semantischen Innenraumkarte gemäß den semantischen Merkmalspunkten des Fahrzeugs und anderen Verkehrszeichenmerkmalsinformationen;
Berechnen einer Positionsbestimmungstransformationsmatrix gemäß dem Abgleichsergebnis; und
Drehen und Verschieben semantischer Merkmalspunkte und anderer Orientierungsmerkmalsinformationen jeweils von zwei Karten gemäß der Positionsbestimmungstransformationsmatrix.

**6.** Fahrzeugpositionsbestimmungsverfahren nach Anspruch 4, **dadurch gekennzeichnet, dass** der Schritt des Erfassens der Korrekturmatrix gemäß dem Abgleichsergebnis in dem Distanzgleitfenster umfasst:

gemäß min $J = \Sigma \rho_i (P_{i/venue} - T_2 {}^* P_{i/new})^2$ , Erfassen der Korrekturmatrix, wenn J minimiert ist; wobei:

$\rho_i$ ein Gewicht eines i-ten abgeglichenen Merkmalspunktes ist;
$P_{i/venue}$ eine Koordinate des i-ten abgeglichenen Merkmalspunktes auf der semantischen Merkmalskarte ist;
$P_{i/new}$ eine Koordinate des i-ten abgeglichenen Merkmalspunktes in einer Fahrspurkarte des Fahrzeugs ist; und
$T_2$ die Korrekturmatrix ist.

**7.** Fahrzeugpositionsbestimmungsvorrichtung, **dadurch gekennzeichnet, dass** die Vorrichtung umfasst:

ein Identifikationsmodul (202), das dafür ausgelegt ist, einen Standorteingang zu identifizieren;
ein Kartenerfassungsmodul (203), das dafür ausgelegt ist, eine semantische Innenraumkarte des Standortes gemäß dem Standorteingang zu erfassen, wobei die semantische Innenraumkarte semantische Merkmalspunkte des Standortes umfasst, wobei die semantischen Merkmalspunkte semantische und erkennbare Merkmalspunkte einer Straße sind, die mindestens eines von Temposchwellen, Einfahrt- und Ausfahrtrampenpunkten, Straßenverbindungspunkten, Parkplätzen und Hindernispositionen umfassen, und wobei die semantische Innenraumkarte eine Karte ist, die aus semantischen Merkmalspunkten und gegenseitigen Beziehungen der semantischen Merkmalspunkte zusammengesetzt ist;
ein Korrekturmodul (204), das dafür ausgelegt ist, Positionsbestimmungsinformationen des Fahrzeugs auf der semantischen Innenraumkarte gemäß den semantischen Merkmalspunkten, die während der Bewegung des Fahrzeugs erfasst wurden, zu korrigieren, wobei das Korrigieren von Positionsbestimmungsinformationen des Fahrzeugs auf der semantischen Innenraumkarte gemäß den semantischen Merkmalspunkten, die während der Bewegung des Fahrzeugs erfasst wurden, umfasst:

Identifizieren der semantischen Merkmalspunkte gemäß den Bewegungsdaten, die während der Bewegung erhalten wurden; und
Korrigieren der Positionsbestimmungsinformationen des Fahrzeugs gemäß den semantischen Merkmalspunkten,
wobei die Bewegungsdaten eine Fahrzeuggeschwindigkeit, eine beobachtete Quantität einer Trägheitsmesseinheit, einen Winkel eines Lenkrads und eine Karosserielage des Fahrzeugs umfassen, und das Identifizieren der semantischen Merkmalspunkte umfasst:

Identifizieren der Einfahrt- und Ausfahrtrampenpunkte gemäß der Karosserielage des Fahrzeugs und der beobachteten Quantität der Trägheitsmesseinheit;
Identifizieren der Temposchwelle gemäß der Fahrzeuggeschwindigkeit und der beobachteten Quantität der Trägheitsmesseinheit; und

Identifizieren des Straßenverbindungspunktes gemäß dem Winkel des Lenkrads und der beobachteten Quantität der Trägheitsmesseinheit; und

ein Positionsbestimmungsinformationen-Erfassungsmodul (205), das dafür ausgelegt ist, die Positionsbestimmungsinformationen des Fahrzeugs gemäß den Bewegungsinformationen des Fahrzeugs relativ zu einem vorherigen semantischen Merkmalspunkt zu erfassen.

8. Fahrzeugpositionsbestimmungsvorrichtung nach Anspruch 7, **dadurch gekennzeichnet, dass** die Vorrichtung des Weiteren umfasst:
ein Transformationsbeziehungs-Erfassungsmodul 201, das dafür ausgelegt ist, eine Transformationsbeziehung zwischen einer GPS-Koordinate und einem Koordinatensystem zur Positionsbestimmung in Innenräumen zu erhalten, bevor in einen Standort eingefahren wird.

9. Fahrzeug, **dadurch gekennzeichnet, dass** das Fahrzeug die Fahrzeugpositionsbestimmungsvorrichtung nach Anspruch 7 umfasst.

10. Computerlesbares Speichermedium, **dadurch gekennzeichnet, dass** auf dem computerlesbaren Speichermedium ein Computerprogramm gespeichert ist und das Computerprogramm einen Computer veranlasst, das Fahrzeugpositionsbestimmungsverfahren nach einem der Ansprüche 1 bis 6 auszuführen.

11. Computerprogrammprodukt, **dadurch gekennzeichnet, dass** das Computerprogrammprodukt, wenn es auf einem Computer läuft, den Computer veranlasst, das Fahrzeugpositionsbestimmungsverfahren nach einem der Ansprüche 1 bis 6 auszuführen.

12. Anwendungsveröffentlichungsplattform, **dadurch gekennzeichnet, dass** die Anwendungsveröffentlichungsplattform zum Veröffentlichen eines Computerprogrammprodukts ausgelegt ist, wobei, wenn das Computerprogrammprodukt auf einem Computer läuft wird, der Computer veranlasst wird, das Fahrzeugpositionsbestimmungsverfahren nach einem der Ansprüche 1 bis 6 auszuführen.

**Revendications**

1. Procédé de positionnement de véhicule, **caractérisé en ce que** le procédé comprend de :

identifier (102) une entrée de site ;
acquérir (103) une carte sémantique d'intérieur du site en fonction de l'entrée de site, la carte sémantique d'intérieur comprenant des points de caractéristiques sémantiques du site, dans lequel les points de caractéristiques sémantiques sont des points de caractéristiques sémantiques et reconnaissables dans une route, comprenant au moins un parmi : des dos d'âne, des points de pente d'entrée et de sortie, des points de liaison routière, des lieux de stationnement, des positions d'obstacles, et dans lequel la carte sémantique d'intérieur est une carte composée de points de caractéristiques sémantiques et de relations mutuelles des points de caractéristiques sémantiques ;
corriger (104) des informations de positionnement du véhicule dans la carte sémantique d'intérieur en fonction des points de caractéristiques sémantiques acquis au cours du déplacement du véhicule, comprenant de :

identifier les points de caractéristiques sémantiques en fonction de données de déplacement obtenues pendant le déplacement ; et
corriger les informations de positionnement du véhicule en fonction des points de caractéristiques sémantiques,
dans lequel les données de déplacement comprennent une vitesse de véhicule, une quantité observée d'une IMU, un angle d'un volant de direction et une position de carrosserie du véhicule, et l'identification des points de caractéristiques sémantiques comprend de :

identifier les points de pente d'entrée et de sortie en fonction de la position de carrosserie du véhicule et de la quantité observée de l'IMU ;
identifier le dos d'âne en fonction de la vitesse de véhicule et de la quantité observée de l'IMU ; et
identifier le point de liaison routière en fonction de l'angle du volant de direction et de la quantité observée de l'IMU ; et

acquérir (105) les informations de positionnement du véhicule en fonction d'informations de déplacement du véhicule par rapport à un point de caractéristique sémantique précédent.

2. Procédé de positionnement de véhicule selon la revendication 1, **caractérisé en ce que**
avant l'étape d'identification de l'entrée de site, le procédé comprend en outre de : obtenir (101) une relation de transformation entre une coordonnée GPS et un système de coordonnées de positionnement en intérieur.

**3.** Procédé de positionnement de véhicule selon la revendication 2, **caractérisé en ce que**
l'étape d'obtention (101) de la relation de transformation entre la coordonnée GPS et le système de coordonnées de positionnement en intérieur comprend de :
définir une zone de transition pour obtenir la relation de transformation entre la coordonnée GPS et le système de coordonnées de positionnement en intérieur :

faire rouler le véhicule dans une zone de transition pour acquérir les points de caractéristiques, et d'après la formule min $J = \Sigma(P_{il/gps} - T_1 * P_{il/scu})^2$ , acquérir la relation de transformation entre la coordonnée GPS et le système de coordonnées de positionnement en intérieur lorsque J est minimisé ;
dans lequel :

$P_{il/gps}$ est une coordonnée GPS d'un $i^{ème}$ point de caractéristique dans la zone de transition sur une carte GPS ;
$P_{il/scu}$ est une coordonnée du système de coordonnées de positionnement en intérieur obtenue par le $i^{ème}$ point de caractéristique dans la zone de transition via un odomètre de véhicule ; et
$T_1$ est la relation de transformation entre la coordonnée GPS et le système de coordonnées de positionnement en intérieur.

**4.** Procédé de positionnement de véhicule selon la revendication 1, **caractérisé en ce que**
l'étape de correction des informations de positionnement du véhicule en fonction des points de caractéristiques sémantiques comprend de :

réaliser un appariement topologique global en fonction des points de caractéristiques sémantiques et de la carte sémantique d'intérieur ;
apparier les points de caractéristiques sémantiques dans une fenêtre de distance glissante ;
acquérir une matrice de correction en fonction du résultat de l'appariement dans la fenêtre de distance glissante ; et
corriger les informations de positionnement du véhicule en fonction de la matrice de correction.

**5.** Procédé de positionnement de véhicule selon la revendication 4, **caractérisé en ce que**

l'étape de réalisation de l'appariement topologique global en fonction des points de caractéristiques sémantiques et de la carte sémantique d'intérieur comprend spécifiquement de ;
réaliser l'appariement avec des informations correspondantes dans la carte sémantique d'intérieur en fonction des points de caractéristiques sémantiques du véhicule et d'autres informations de caractéristiques de panneaux routiers ;
calculer une matrice de transformation de positionnement en fonction du résultat de l'appariement ; et
faire tourner et déplacer en translation des points de caractéristiques sémantiques et d'autres informations de caractéristiques de repère de deux cartes respectivement en fonction de la matrice de transformation de positionnement.

**6.** Procédé de positionnement de véhicule selon la revendication 4, **caractérisé en ce que**
l'étape d'acquisition de la matrice de correction en fonction du résultat de l'appariement dans la fenêtre de distance glissante comprend de :

d'après min $J = \Sigma \rho_i (P_{il/venue} - T_2 * P_{il/new})^2$ , acquérir la matrice de correction lorsque J est minimisé ;
dans lequel :

$\rho_i$ est un poids d'un $i^{ème}$ point de caractéristique apparié ;
$P_{il/venue}$ est une coordonnée du $i^{ème}$ point de caractéristique apparié sur la carte de caractéristique sémantique ;
$P_{il/new}$ est une coordonnée du $i^{ème}$ point de caractéristique apparié sur une carte de piste du véhicule ; et
$T_2$ est la matrice de correction.

**7.** Dispositif de positionnement de véhicule, **caractérisé en ce que** le dispositif comprend :

un module d'identification (202) configuré pour identifier une entrée de site ;
un module d'acquisition de carte (203) configuré pour acquérir une carte sémantique d'intérieur du site en fonction de l'entrée de site, la carte sémantique d'intérieur comprenant des points de caractéristiques sémantiques du site, dans lequel les points de caractéristiques sémantiques sont des points de caractéristiques sémantiques et reconnaissables dans une route, comprenant au moins un élément parmi : des dos d'âne, des points de pente d'entrée et de sortie, des points de liaison routière, des lieux de stationnement, des positions d'obstacles, et dans lequel la carte sémantique d'intérieur est une carte composée de points de caractéristiques sémantiques et de relations mutuelles des points de caractéristiques sémantiques ;
un module de correction (204) configuré pour corriger des informations de positionnement du véhicule dans la carte de sémantique intérieure en fonction des points de caractéristiques sémantiques acquis pendant le déplacement du véhicule, dans lequel la correction des informations de positionnement du véhicule dans la carte de sémantique intérieure en fonction des points de caractéristiques sémantiques acquis pendant le déplacement du véhicule comprend de :

identifier les points de caractéristiques sémantiques en fonction de données de déplacement obtenues pendant le déplacement ; et

corriger les informations de positionnement du véhicule en fonction des points de caractéristiques sémantiques,

dans lequel les données de déplacement comprennent une vitesse de véhicule, une quantité observée d'une IMU, un angle d'un volant de direction et une position de carrosserie du véhicule, et l'identification des points de caractéristiques sémantiques comprend de :

identifier les points de pente d'entrée et de sortie en fonction de la position de carrosserie du véhicule et de la quantité observée de l'IMU ;

identifier le dos d'âne en fonction de la vitesse de véhicule et de la quantité observée de l'IMU ; et

identifier le point de liaison routière en fonction de l'angle du volant de direction et de la quantité observée de l'IMU ; et

un module d'acquisition d'informations de positionnement (205) configuré pour acquérir les informations de positionnement du véhicule en fonction d'informations de déplacement du véhicule par rapport à un point de caractéristique sémantique précédent.

8. Dispositif de positionnement de véhicule, **caractérisé en ce que** le dispositif comprend en outre :
un module d'acquisition de relation de transformation (201) configuré pour obtenir une relation de transformation entre une coordonnée GPS et un système de coordonnées de positionnement en intérieur avant d'entrer dans un site.

9. Véhicule, **caractérisé en ce que** le véhicule comprend le dispositif de positionnement de véhicule selon la revendication 7.

10. Support de stockage lisible par ordinateur, **caractérisé en ce qu'**un programme informatique est stocké sur le support de stockage lisible par ordinateur, et le programme informatique amène un ordinateur à exécuter le procédé de positionnement de véhicule selon l'une quelconque des revendications 1 à 6.

11. Produit de programme informatique, **caractérisé en ce que** le produit de programme informatique, lorsqu'il fonctionne sur un ordinateur, amène l'ordinateur à exécuter le procédé de positionnement de véhicule selon l'une quelconque des revendications 1 à 6.

12. Plate-forme de publication d'application, **caractérisée en ce que** la plate-forme de publication d'application est configurée pour publier un produit de programme informatique, lorsque le produit de programme informatique fonctionne sur un ordinateur, l'ordinateur est amené à exécuter le procédé de positionnement de véhicule selon l'une quelconque des revendications 1 à 6.

obtaining a transformation relation between a GPS coordinate and an indoor positioning coordinate system before entering a site — 101

identifying a site entrance — 102

acquiring an indoor semantic map of the site according to the site entrance, the indoor semantic map comprising semantic feature points of the site — 103

correcting positioning information of the vehicle in the indoor semantic map according to the semantic feature points acquired during the movement of the vehicle — 104

acquiring the positioning information of the vehicle according to movement information of the vehicle relative to a previous semantic feature point — 105

FIG. 1

transformation relation acquiring
module 201

identification module 202

map acquiring module 203

correction module 204

positioning information acquisition
module 205

FIG. 2

**EP 3 936 822 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007021907 A1